(19) Europäisches Patentamt
European Patent Office
Office européen des brevets

(11) **EP 2 483 088 B1**

(12) **FASCICULE DE BREVET EUROPEEN**

(45) Date de publication et mention de la délivrance du brevet:
**24.07.2013 Bulletin 2013/30**

(51) Int Cl.:
***B60C 13/00*** *(2006.01)*  ***B29C 33/42*** *(2006.01)*
***B29D 30/06*** *(2006.01)*

(21) Numéro de dépôt: **10749883.4**

(86) Numéro de dépôt international:
**PCT/EP2010/063212**

(22) Date de dépôt: **09.09.2010**

(87) Numéro de publication internationale:
**WO 2011/036061 (31.03.2011 Gazette 2011/13)**

(54) **PNEUMATIQUE AYANT UN MARQUAGE A FORT CONTRASTE**

REIFEN MIT EINER HOHEN KONTRAST AUFWEISENDEN MARKIERUNG

TIRE HAVING A HIGH-CONTRAST MARKING

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **28.09.2009 FR 0956675**

(43) Date de publication de la demande:
**08.08.2012 Bulletin 2012/32**

(73) Titulaires:
 • **COMPAGNIE GENERALE DES ETABLISSEMENTS MICHELIN**
   **63000 Clermont-Ferrand (FR)**
 • **MICHELIN Recherche et Technique S.A.**
   **1763 Granges-Paccot (CH)**

(72) Inventeurs:
 • **MUHLHOFF, Olivier**
   **F-63000 Clermont-Ferrand (FR)**
 • **DESVIGNES, Jean-Claude**
   **F-63360 Gerzat (FR)**

(74) Mandataire: **Lasson, Cédric Y. M.**
   **Manufacture Française des Pneumatiques MICHELIN**
   **23, Place des Carmes-Déchaux**
   **SGD/LG/PI - F35 - Ladoux**
   **63040 CLERMONT-FERRAND Cedex 9 (FR)**

(56) Documents cités:
   **EP-A2- 1 063 071     WO-A1-2007/045425**

# Description

L'invention concerne le domaine technique des pneumatiques pour véhicules, comportant des marquages à fort contraste.

Plus particulièrement, l'invention est un perfectionnement de la publication WO2007/045425 qui décrit des types particuliers de marquages à fort contraste.

La surface des pneumatiques supporte une grande quantité de marquages destinés d'une part à donner des informations techniques légales sur la qualité du pneumatique, et d'autre part à permettre au consommateur de distinguer la marque et l'origine du produit.

Ces marquages sont, en règle générale, obtenus par des motifs en relief disposés sur la surface du pneumatique et correspondent à des motifs en creux réalisés sur la surface de moulage. Usuellement, les moules de vulcanisation sont réalisés en métal avec un très bon aspect de finition de surface. Mais la surface externe du pneumatique qui en résulte, lisse et noire, a pour effet de renvoyer la lumière.

L'effet de contraste décrit dans la publication citée ci-dessus, est obtenu en disposant une pluralité de brins répartis sur la totalité d'un motif, chaque brin ayant une section moyenne dont le diamètre est compris entre 0,03 mm et 0,5 mm, dont la hauteur est au moins égale à 0,1 mm, et répartis sur la surface du motif avec une densité au moins égale à 5 brins par mm$^2$, et de préférence supérieure à 15 brins par mm$^2$.

On observera que le même effet de contraste est obtenu lorsque, en lieu et place de brins, on dispose sur la totalité de la surface du motif des lames parallèles ayant une largeur moyenne comprise entre 0,03 mm et 0,5 mm, dont la hauteur est au moins égale à 0,1 mm et disposées selon un pas d'au plus 0,5 mm.

L'effet de ces brins, ou de ces lames, est de piéger la lumière incidente sur la surface du motif et, par absorption de la lumière, de donner un aspect noir et mat au motif que l'on cherche à réaliser.

L'objet de la présente invention est de proposer une forme particulière d'état de surface des brins ou des lames ci-dessus permettant d'améliorer l'effet de contraste des motifs comprenant ces brins ou ces lames.

L'invention concerne donc un pneumatique ayant une surface visible comportant des motifs faisant contraste par rapport à ladite surface, ledit motif comprenant sur la totalité de sa surface une pluralité de brins avec une densité au moins égale à cinq brins par mm$^2$ ou une pluralité de lames parallèles entre elles et disposées selon un pas d'au plus 0,5 mm, chaque brins ayant une section moyenne dont le diamètre (d) est compris entre 0,03 mm et 0,5 mm, ou chaque lame ayant une largeur moyenne (d) comprise entre 0,03 mm et 0,5 mm.

Selon l'invention il convient que les brins ou les lames aient, sur au moins un quart de leur surface, une rugosité moyenne Rz comprise entre 5 μm et 30 μm.

En effet, il a été mis en évidence que la lumière incidente est en quelque sorte piégée par des réflexions multiples sur la surface des brins, ou des lames, lorsque ladite surface comporte des aspérités susceptibles, en raison de la multitude d'angles d'incidence qu'elles offrent par rapport à la surface moyenne, de réfléchir la lumière selon des directions aléatoires. Il en résulte une impression visuelle plus mate, et dans le cas des motifs réalisés sur les pneumatiques une couleur noire plus intense et formant un meilleur contraste avec le reste de la surface du pneumatique.

Le contraste est d'autant plus important lorsque la surface du motif côtoie des surfaces brillantes.

L'effet de contraste commence à être sensible, par rapport à des brins dont la surface serait moins rugueuse, lorsque au moins le quart de la surface du brin ou de la lame possède cette rugosité.

De même, comme on le verra par la suite, il est possible de faire varier l'intensité du contraste en augmentant la proportion de la surface possédant cette rugosité minimale ou en positionnant la surface plus rugueuse vers la tête ou vers le pied du brin ou de la lame.

Un procédé de réalisation d'un moule métallique destiné au moulage et à la vulcanisation d'un pneumatique selon l'invention et comportant des motifs formant un contraste supérieur avec la surface est décrit dans les paragraphes suivants.

Selon ce procédé, on réalise, à l'aide d'un laser générant un pinceau lumineux d'une énergie suffisante pour sublimer le métal constituant le moule, des motifs comprenant sur la totalité de leur surface des cavités ayant une section moyenne dont le diamètre (d) est compris entre 0,03 mm et 0,5 mm avec une densité au moins égale à 5 cavités par mm$^2$, ou des sillons parallèles entre eux d'une largeur moyenne (d) donnée comprise entre 0,03 mm et 0,5 mm et distants d'un pas inférieur à 0,5 mm, lesdites cavités ou lesdits sillons ayant une profondeur au moins égale à 0,1 mm, en appliquant le pinceau lumineux émanant de la source laser sur la surface du moule en une ou plusieurs passes successives, chacune des passes ayant pour effet d'éroder le métal sur une surface et une profondeur donnée. Ce procédé se caractérise en ce que, au cours d'une passe, la mise en fusion et la sublimation du métal par le rayon lumineux a pour effet de projeter le métal liquide et de condenser les vapeurs de métal sur les parois de la cavité obtenue lors des passes précédentes.

L'élévation quasi instantanée de la température du métal par l'énergie provenant de la source laser provoque la mise en fusion mais également la sublimation du métal sous forme d'un dégazage violent, qui a pour effet de projeter des nodules de matière sur les parois de la cavité ou du sillon réalisées lors des passes précédentes. En se solidifiant, ces nodules créent des irrégularités de surface dont les caractéristiques correspondent précisément à la rugosité recherchée pour assurer le moulage des brins ou des lames faisant l'objet de l'invention.

Les gaz provenant de la sublimation du métal se condensent sur les parois de la cavité et viennent augmenter les irrégularités.

Il est donc important que la fusion et la sublimation du métal soient opérées en un temps très bref pour engendrer ce phénomène "explosif".

D'autre part, il convient de procéder par passes successives de manière à permettre aux projections liquides et aux vapeurs de se solidifier ou de se recondenser entre chaque passes sur lesdites parois, plus froides.

De préférence, on ordonne les passes de sorte que la section de la surface érodée au cours d'une passe soit supérieure à la section érodée au cours de la passe précédente.

En variante, on ordonne les passes de sorte que la section de la surface érodée au cours d'une passe soit inférieure à la section érodée au cours de la passe précédente.

En variante, on ordonne une partie des passes de sorte que la section de la surface érodée au cours d'une passe soit supérieure à la section érodée au cours de la passe précédente et on ordonne une autre partie des passes de sorte que la section de la surface érodée au cours d'une passe soit inférieure à la section érodée au cours de la passe précédente.

De préférence, on aspire à l'aide d'un moyen d'aspiration adapté, la vapeur de métal dégagée par l'application du pinceau de lumière sur la surface en métal.

La description qui suit s'appuie sur les figures 1 à 9 dans lesquelles :

- la figure 1 représente une vue schématique de la surface d'un motif comportant des brins,
- la figure 2 représente une vue schématique de la surface d'un motif comportant des lames,
- la figure 3 illustre le mode de calcul de la rugosité moyenne d'une surface,
- la figure 4 représente une photo réalisée à l'aide d'un microscope électronique d'un motif comprenant des brins,
- la figure 5 représente une photo réalisée à l'aide d'un microscope électronique de la partie supérieure d'une cavité réalisée à l'aide d'un procédé selon l'invention,
- la figure 6 représente une photo réalisée à l'aide d'un microscope électronique de la partie inférieure d'une cavité réalisée à l'aide d'un procédé selon l'invention,
- les figures 7, 8 et 9 représentent des illustrations schématiques de la façon d'ordonner les passes les unes par rapport aux autres pour obtenir des effets de contraste plus ou moins intenses.

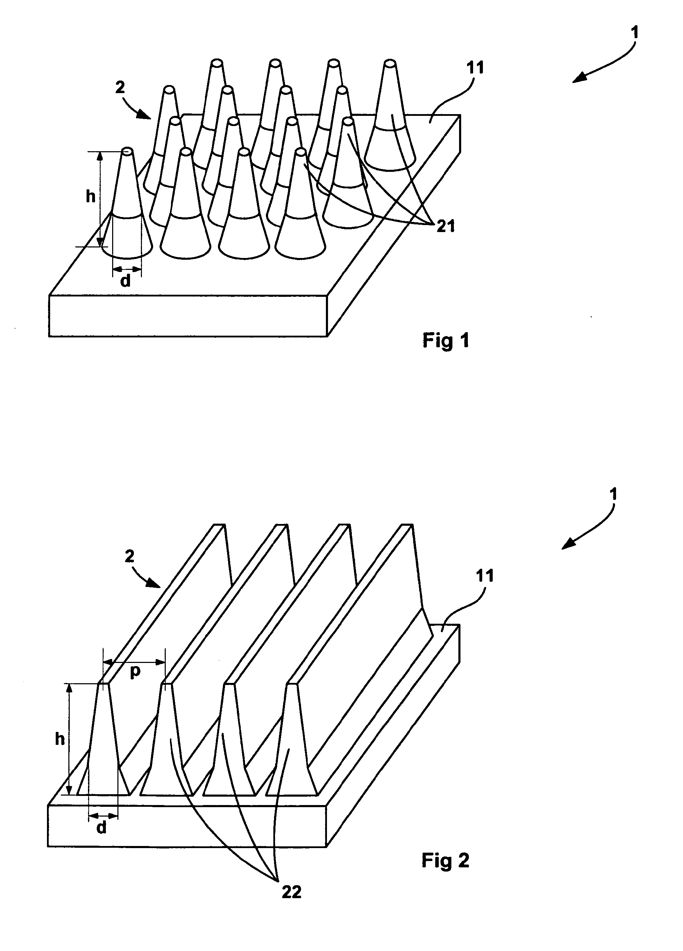

La figure 1 représente une portion de pneumatique 1 dont la surface visible 11 comporte un motif 2. Ce motif est constitué d'une multiplicité de brins 21 d'une hauteur h, et dont la section moyenne a un diamètre d. Pour obtenir un effet de contraste perceptible, comme cela est expliqué dans la publication WO 2006/009980 le diamètre d de la section moyenne d'un brin doit être compris entre 0,03 mm et 0,5 mm, et la densité de brins doit être supérieure à cinq brins par mm$^2$ et de préférence supérieure à quinze brins par mm$^2$.

La hauteur h est de préférence supérieure à 0,1 mm. La hauteur du brin est mesurée entre le pied du brin, en contact avec la surface 11 du pneumatique, et la tête du brin. On observe toutefois que, lorsque le rapport h/d entre la hauteur du brin et le diamètre de la section moyenne est trop faible, la partie supérieure des brins a tendance à se recourber, ce qui a pour conséquence de réduire l'effet de contraste recherché. On choisira donc un rapport h/d compris entre 1,2 et 6 et préférentiellement entre 2 et 4.

La forme générale des brins étant généralement conique, la section desdits brins diminue lorsque l'on se déplace du pied vers la tête. On entend donc par section moyenne la moyenne des sections mesurées à intervalles réguliers depuis le pied jusqu'à la tête du brin.

Le motif 2 représenté à la figure 2 comprend quant à lui une pluralité de lames 22, de hauteur h et de largeur moyenne d. De manière similaire à ce qui est exposé ci-dessus les effets de contraste recherchés sont obtenus avec des dimensions correspondantes à savoir, une valeur de la largeur moyenne d au moins égale à 0,1 mm et une densité, ici décrite par un pas de valeur p qui doit être inférieur à 0,5 mm et préférentiellement inférieur à 0,2 mm.

Pour les mêmes raisons que pour les brins, on s'arrange pour que le rapport h/d soit compris entre 1,2 et 6, et préférentiellement entre 2 et 4.

Selon l'invention, il convient qu'au moins un quart de la surface externe du brin ou de la lame, à savoir la surface comprise entre le pied et la tête du brin 21 ou de la lame 22, possède un état de surface dont la rugosité moyenne Rz est comprise entre 5 $\mu$m et 30 $\mu$m.

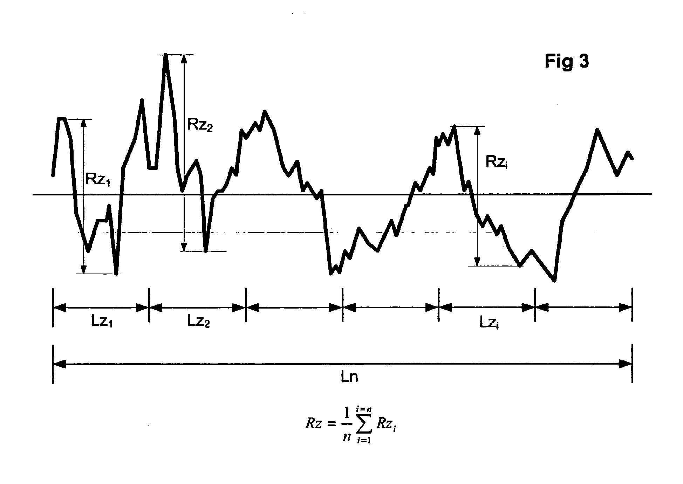

Pour calculer la rugosité moyenne Rz d'une surface, on découpe une longueur donnée de la surface à évaluer dite longueur d'évaluation Ln, en n longueurs de bases Lz de longueur identiques, comme cela est illustré à la figure 3. Sur chacune des longueurs de base on détermine une hauteur individuelle de profil $Rz_i$ qui est la somme de la plus grande des hauteurs de saillie et de la plus grande des profondeurs de creux du profil de la surface à l'intérieur de la longueur de base $Lz_i$. La hauteur moyenne Rz est la moyenne arithmétique des valeurs individuelles $Rz_i$ sur l'ensemble des longueurs de base considérées (norme DIN 4768 ; 1990), et s'exprime par la formule suivante :

$$Rz = \frac{1}{n} \sum_{i=1}^{i=n} Rz_i$$

Les limites de 5 $\mu$m et de 30 $\mu$m sont des limites

établies de manière expérimentale. La valeur inférieure étant la valeur en dessous de laquelle on considère que la surface du brin ou de la lame devient "lisse" et va donc réfléchir la lumière incidente qui n'est alors plus piégée dans le réseau formé par les brins.

La limite supérieure est donnée à titre indicatif et correspond, en considérant les dimensions du brin, à la limite acceptable pour éviter les arrachements du brin lors du démoulage. Cette valeur supérieure, qui correspond à un maximum d'efficacité du phénomène de piégeage de la lumière, pourra favorablement être obtenue lorsqu'on augmente la section moyenne des brins ou la largeur des lames, en observant que l'augmentation de cette valeur a pour conséquence la diminution de la densité de brins par unité de surface, et donc une diminution de l'effet de contraste.

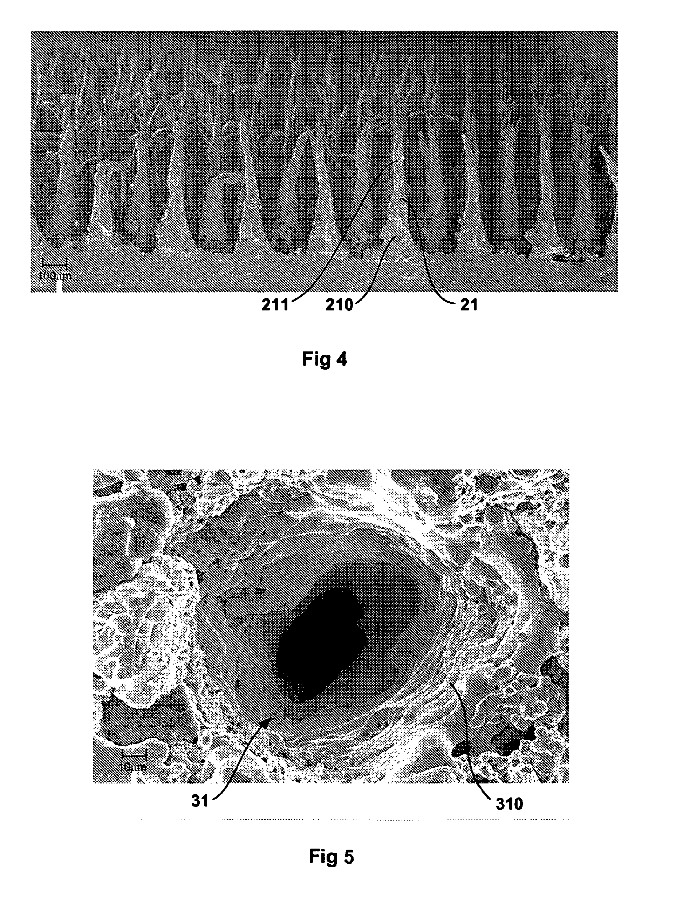

La figure 4 est une photographie obtenue à l'aide d'un microscope électronique de la surface d'un pneumatique comportant un motif comprenant des brins 21. On observe que-le-pied du brin 210 présente une rugosité importante alors que la partie supérieure 220, est plus lisse.

On notera également sur cette prise de vue des brins dont la tête est recourbée en raison d'un rapport h/d proche de la limite supérieure recommandée.

L'obtention de motifs comprenant une pluralité de brins se fait par moulage, en aménageant à cet effet un moule de cuisson sur lequel figurent les motifs dont on cherche à augmenter le contraste.

Le procédé prévoit l'usage d'une source lumineuse laser dont la puissance est suffisante pour liquéfier et sublimer le métal constituant le moule. A titre exemplatif, un laser de marque IPG d'une puissance de 50W, du type laser de gravage, à impulsions, a permis d'obtenir avec succès les résultats expérimentaux présentés aux figures 4, 5 et 6 de la présente description. La fréquence des impulsions, de l'ordre de 100 KHz, ainsi que la puissance, peuvent être adaptés pour moduler la quantité d'énergie transmise à la surface du moule à chaque impulsion.

Comme il a été dit plus haut, on applique le pinceau lumineux émanant de la source laser sur la surface du moule par passes successives, chacune des passes ayant pour effet d'éroder le métal sur une surface et une profondeur donnée.

Au cours d'une passe, on s'arrange pour communiquer au métal une énergie thermique par unité de surface en un temps suffisamment court, pour que la mise en fusion et la sublimation du métal par le rayon lumineux ait pour effet de projeter le métal liquide et de condenser les vapeurs de métal sur les parois de la cavité obtenue lors des passes précédentes.

Pour ce faire, on adapte la largeur du pinceau lumineux et la vitesse de balayage.

Ainsi, pour un laser de 50 W de puissance, la largeur du pinceau lumineux est de l'ordre de 70 $\mu$m. Il y a lieu toutefois d'observer que plus de 70% de l'énergie est concentrée dans la partie centrale du faisceau, et que cette valeur peut être optimisée en fonction du réglage des optiques de renvoi utilisées pour guider le faisceau laser vers le point d'impact choisi sur la surface du moule. Il en résulte que la surface utile du faisceau lumineux est sensiblement comprise entre 0,001 mm$^2$ et 0,01 mm$^2$.

La fréquence des impacts est de 100 KHz soit une impulsion toutes les 10 $\mu$s. La durée de l'impulsion elle-même peut être encore plus courte en fonction du type de laser à impulsion tels que les lasers utilisés couramment dans l'industrie du gravage ou de la découpe par laser.

L'augmentation de profondeur de la cavité obtenue à l'issue de chaque passe, et correspondant à la quantité de métal enlevé, est relativement faible, et reste comprise entre 0,1 mm et 0,20 mm, dés lors que l'évacuation de la matière se fait essentiellement par l'évacuation des vapeurs produites.

Il est donc nécessaire de prévoir un moyen d'aspiration des gaz afin d'éviter les pollutions du milieu de travail.

Toutefois, il convient de ne pas régler la puissance de l'aspiration au maximum possible de ce genre d'installation, de manière à ne pas extraire par ventilation forcée la totalité des vapeurs produites, ce qui aurait pour effet de réduire l'ampleur du phénomène recherché de recondensation de la vapeur métallique sur les parois de la cavité. Bien qu'ils ne satisfassent pas les normes imposées d'hygiène et de sécurité dans les milieux industriels, des essais réalisés sans une ventilation locale forcée placée à proximité immédiate du point d'impact ont malgré tout donnés des résultats satisfaisants.

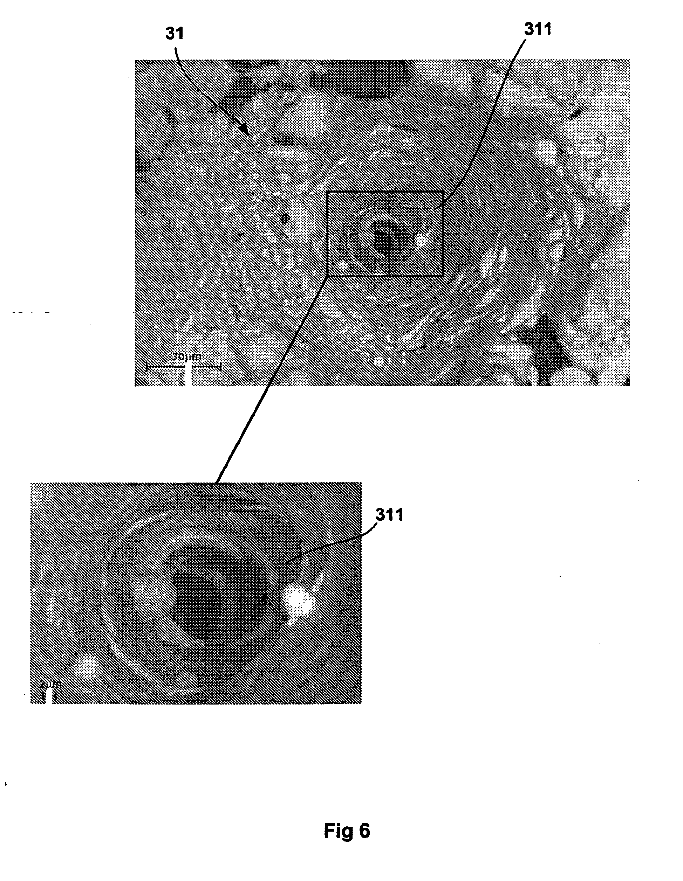

Les figures 5 et 6 sont des photographies réalisées à l'aide d'un microscope électronique d'une cavité 3, destinée à mouler un brin 21. On observe sur la figure 5 que la paroi 310 de la cavité située à proximité de la partie débouchante de la dite cavité (destinée à mouler le pied 210 du brin 21) présente une forte rugosité. La figure 6 et le grossissement disposé en médaillon représentent une vue du fond 320 de la cavité 3 destinée à mouler la tête 220 du brin. Dans cette zone, la surface de la paroi de la cavité est beaucoup plus lisse. Ceci s'explique en raison du fait que les parties de la cavité réalisées en dernier sont moins soumises à la projection de nodules et à la condensation des vapeurs produites lors des passes successives précédentes, et ne présentent donc pas la rugosité requise.

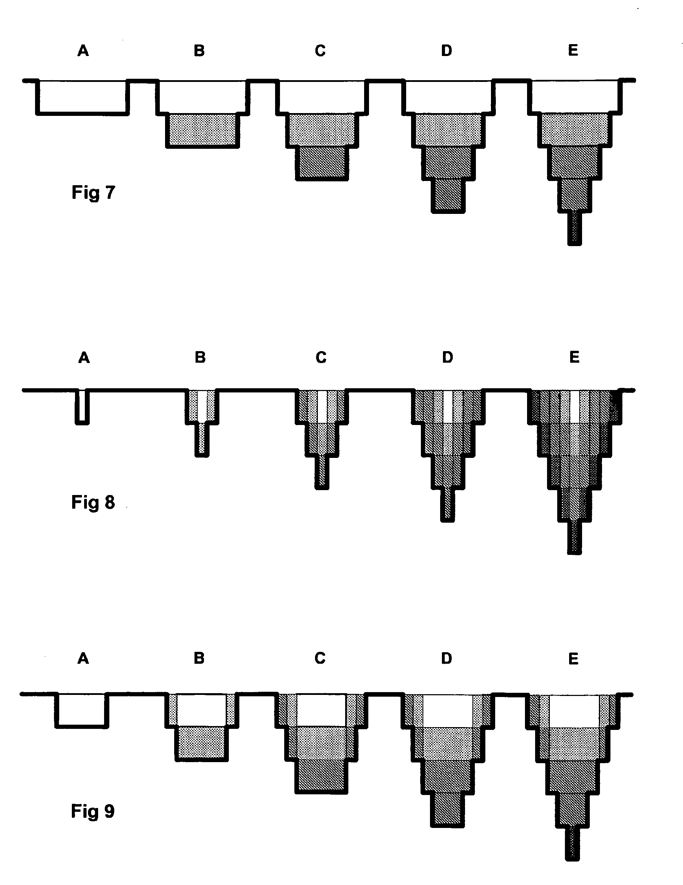

Il est alors possible de tirer partie de ce phénomène pour moduler la répartition des zones présentant la rugosité recherchée sur la surface du brin ou de la lame en modulant la section de la surface érodée à chaque passe comme cela est illustré de manière schématique aux figures 7, 8 et 9.

La figure 7 illustre le cas dans lequel, au cours de la première passe (A), on érode la surface du motif sur sa plus grande section, correspondant sensiblement à la section du pied du brin, ce qui est représenté par une découpe (de couleur claire). La passe suivante (B), permet de creuser la cavité sur une section plus réduite (couleur gris clair), et ainsi de suite en considérant que la dernière passe (E) se fait sur la section la plus faible correspondant sensiblement à la partie de la cavité destinée à mouler la tête du brin.

La figure 8 correspond au cas inverse dans lequel la première passe (A) se fait sur la section la plus faible, la deuxième passe (B) concerne une section supérieure, de sorte qu'à chaque passe on augmente la section de la cavité sur l'ensemble de sa profondeur.

La figure 9 représente la situation dans laquelle on combine les deux modes opératoires précédents en commençant par une première passe (A) de section moyenne. La seconde (B) et la troisième (C) passe se font en élargissant la section des passes précédentes, et les deux dernières passes (D et E) se font en enlevant la matière sur des sections successivement plus faibles.

L'effet de ces modes opératoires différents, est de faire varier les zones préférentielles comportant des surfaces dont la rugosité se situe dans les valeurs recherchées d'une part, et de faire varier la taille desdites rugosités d'autre part.

Dans le cas illustré à la figure 7 on obtiendra des rugosités importantes dans la zone du pied. De manière préférentielle, il a été observé que cette configuration correspond au piégeage maximal de la lumière et donc au maximum de densité du noir. Aussi, de manière préférentielle, on s'arrange pour que la surface du quart inférieur de la hauteur du brin présente la rugosité revendiquée.

Dans le cas illustré à la figure 8 on obtiendra une rugosité moyenne voire faible répartie sur l'ensemble de la surface du brin. Enfin, dans le cas illustré à la figure 9 on obtiendra une rugosité répartie sur l'ensemble de la surface du brin mais plus marquée du coté du pied.

Ce mode opératoire s'applique mutatis mutandis, et avec les mêmes effets, pour la réalisation des lames.

Bien que le procédé en plusieurs passes semble préférable pour obtenir les effets recherchés, il n'est pas déraisonnable de penser, au vu de l'augmentation de la puissance des lasers accessibles à des prix industriellement raisonnables, et de la concentration des faisceaux lumineux liés aux progrès de l'optique industrielle, qu'il soit possible dans un proche avenir de réaliser les cavités en une seule passe du rayon laser. Les enseignements de la présente description s'appliqueraient alors de la même manière.

Enfin, et pour conclure, il a été mis en évidence que la présence d'une forte rugosité au pied du brin ou de la lame, a un effet favorable pour l'évacuation de l'air occlus dans la cavité lors du moulage des brins.

## Revendications

1. Pneumatique (1) ayant une surface visible (11) comportant des motifs (2) faisant contraste par rapport à ladite surface (11), ledit motif (2) comprenant sur la totalité de sa surface une pluralité de brins (21) avec une densité au moins égale à cinq brins par mm$^2$ ou une pluralité de lames (22) sensiblement parallèles entre elles et disposées selon un pas (p) inférieur à 0,5 mm, chaque brins ayant une section moyenne dont le diamètre (d) est compris entre 0,03 mm et 0,5 mm ou chaque lame ayant une largeur moyenne (d) comprise entre 0,03 mm et 0,5 mm, **caractérisé en ce que** les parois des brins (21) ou des lames (22) ont, sur au moins un quart de leur surface, une rugosité moyenne Rz comprise entre 5 $\mu$m et 30 $\mu$m.

2. Pneumatique selon la revendication 1, dans lequel la paroi du brin présentant ladite rugosité est située dans le quart inférieur de la hauteur du brin.

3. Pneumatique selon la revendication 1, dans lequel lesdits brins (21) ou lesdites lames (22) ont une hauteur moyenne au moins égale à 0,1 mm.

4. Pneumatique selon la revendication 1, dans lequel lesdits brins (21) ou lesdites lames (22) ont une section qui diminue en allant du pied du brin ou de la lame vers l'extrémité du brin ou de la lame.

5. Pneumatique selon la revendication 1, dans lequel le rapport entre la hauteur (h) du brin (21) ou de la lame (22), et le diamètre d'une section moyenne (d) du brin (21) ou de la largeur moyenne (d) de la lame (22), est compris entre 1,2 et 6.

6. Pneumatique selon la revendication 1, dans lequel le rapport entre la hauteur (h) du brin (21) ou de la lame (22), et le diamètre d'une section moyenne (d) du brin (21) ou de la largeur moyenne (d) de la lame (22), est compris entre 2 et 4.

7. Pneumatique selon la revendication 1, dans lequel la densité des brins est inférieure à quinze brins par mm$^2$.

8. Pneumatique selon la revendication 1 dans lequel le pas (p) des lames est inférieur à 0,2mm.

## Patentansprüche

1. Reifen (1) mit einer sichtbaren Fläche (11), welche Motive (2) aufweist, die einen Kontrast bezüglich der Fläche (11) aufweisen, wobei das Motiv (2) auf seiner gesamten Fläche eine Vielzahl von Fasern (21) mit einer Dichte, die mindestens fünf Fasern pro mm$^2$ beträgt, oder eine Vielzahl von Lamellen (22), die im Wesentlichen parallel zueinander sind und in einem Abstand (p) von weniger als 0,5 mm angeordnet sind, aufweist, wobei jede Faser einen mittleren Querschnitt aufweist, dessen Durchmesser (d) zwischen 0,03 mm und 0,5 mm liegt, oder jede Lamelle eine mittlere Breite (d) aufweist, die zwischen 0,03 mm und 0,5 mm liegt, **dadurch gekennzeichnet, dass** die Wände der Fasern (21) oder der Lamellen (22) auf mindestens einem Viertel ihrer Oberfläche eine mittlere Rauheit Rz aufweisen, die zwischen 5 μm und 30 μm liegt.

2. Reifen nach Anspruch 1, wobei sich die Wand der Faser, welche diese Rauheit aufweist, im unteren Viertel der Höhe der Faser befindet.

3. Reifen nach Anspruch 1, wobei die Fasern (21) oder die Lamellen (22) eine mittlere Höhe aufweisen, die mindestens 0,1 mm beträgt.

4. Reifen nach Anspruch 1, wobei die Fasern (21) oder die Lamellen (22) einen Querschnitt aufweisen, der sich vom Fuß der Faser oder der Lamelle zum Ende der Faser oder der Lamelle hin verringert.

5. Reifen nach Anspruch 1, wobei das Verhältnis zwischen der Höhe (h) der Faser (21) oder der Lamelle (22) und dem Durchmesser eines mittleren Querschnitts (d) der Faser (21) oder der mittleren Breite (d) der Lamelle (22) zwischen 1,2 und 6 liegt.

6. Reifen nach Anspruch 1, wobei das Verhältnis zwischen der Höhe (h) der Faser (21) oder der Lamelle (22) und dem Durchmesser eines mittleren Querschnitts (d) der Faser (21) oder der mittleren Breite (d) der Lamelle (22) zwischen 2 und 4 liegt.

7. Reifen nach Anspruch 1, wobei die Dichte der Fasern kleiner als fünfzehn Fasern pro mm$^2$ ist.

8. Reifen nach Anspruch 1, wobei der Abstand (p) der Lamellen kleiner als 0,2 mm ist.

**Claims**

1. Tyre (1) having a visible surface (11) comprising patterns (2) contrasting with said surface (11), said pattern (2) comprising, over the entire surface thereof, a plurality of tufts (21) distributed with a density of at least five tufts per mm$^2$ or a plurality of blades (22) which are substantially parallel to one another and arranged with a pitch (p) of less than 0.5 mm, each tuft having a mean cross section having a diameter (d) of between 0.03 mm and 0.5 mm or each blade having a mean width (d) of between 0.03 mm and 0.5 mm, **characterized in that** the walls of the tufts (21) or of the blades (22) have, over at least one quarter of the area thereof, a mean roughness Rz of between 5 μm and 30 μm.

2. Tyre according to Claim 1, in which the wall of the tuft having said roughness is located in the lower quarter of the height of the tuft.

3. Tyre according to Claim 1, in which said tufts (21) or said blades (22) have a mean height of at least 0.1 mm.

4. Tyre according to Claim 1, in which said tufts (21) or said blades (22) have a cross section that decreases from the base of the tuft or blade towards the end of the tuft or blade.

5. Tyre according to Claim 1, in which the ratio of the height (h) of the tuft (21) or blade (22) to the diameter (d) of a mean cross section of the tuft (21) or to the mean width (d) of the blade (22) is between 1.2 and 6.

6. Tyre according to Claim 1, in which the ratio of the height (h) of the tuft (21) or blade (22) to the diameter (d) of a mean cross section of the tuft (21) or to the mean width (d) of the blade (22) is between 2 and 4.

7. Tyre according to Claim 1, in which the density of the tufts is less than 15 tufts per mm$^2$.

8. Tyre according to Claim 1, in which the pitch (p) of the blades is less than 0.2 mm.

**1**

**2**

**11**

h

d

**21**

**Fig 1**

**1**

**2**

**11**

p

h

d

**22**

**Fig 2**

**Fig 3**

$$Rz = \frac{1}{n}\sum_{i=1}^{i=n} Rz_i$$

211     210          21

**Fig 4**

31                      310

**Fig 5**

**Fig 6**

A        B        C        D        E

**Fig 7**

A        B        C        D        E

**Fig 8**

A        B        C        D        E

**Fig 9**

**EP 2 483 088 B1**

## RÉFÉRENCES CITÉES DANS LA DESCRIPTION

**Documents brevets cités dans la description**

- WO 2007045425 A

- WO 2006009980 A